# FASCICULE DE BREVET EUROPEEN

(11) **EP 0 424 274 B1**
(45) Date de publication et mention de la délivrance du brevet: **17.03.1993**
(21) Numéro de dépôt: 90402953.5
(22) Date de dépôt: 19.10.1990
(51) Int. Cl.: E03D 9/14, F16L 55/027

(54) **Dispositif d'alimentation en eau notamment pour réservoir de W.C.**
Vorrichtung zur Wasserzuführung, insbesondere für einen WC-Spülkasten
Device for feeding water especially into a water closet flushing reservoir

(30) Priorité: 20.10.1989 FR 8913771
(43) Date de publication de la demande: 24.04.1991
(73) Titulaire: Ragot, Claude, F-56500 Locmine (FR)
(72) Inventeur: Ragot, Claude, F-56500 Locmine (FR)
(74) Mandataire: Wagret, Frédéric

(56) Documents cités:
- WO-A-85/02241
- DE-A- 2 210 846
- DE-B- 1 246 614
- GB-A- 1 000 018

## Description

La présente invention concerne une installation de distribution d'eau notamment pour alimenter un réservoir à niveau constant, tel qu'un réservoir de chasse de toilettes sanitaires, en vue d'un fonctionnement silencieux, et visant à éviter la formation et la dispersion de vibrations sonores dans l'ensemble de l'installation et dans les conduites d'alimentation en eau sanitaire, selon le préambule de la revendication 1 (DE-B-1246614)

On sait que le fonctionnement intermittent de dispositifs d'équipements sanitaires à chasse d'eau, est une source de vibrations sonores qui sont engendrées au niveau du réservoir et de son ensemble d'alimentation et d'obturation, et qui ont tendance à se répandre depuis la source de vibration à travers les canalisations et à provoquer en conséquence des effets sonores éventuellement jusque dans des pièces éloignées du point de formation.

Cette pollution sonore peut être une source de désagrément notamment dans les habitations collectives et à plus forte raison dans les établissements hôteliers ou analogues.

L'invention vise à remédier à cet inconvénient et selon un premier objet elle permet, au niveau de l'ensemble d'interruption de l'arrivée d'eau, d'éviter la formation de vibrations sonores dépassant un niveau raisonnable.

Et selon un second objet de l'invention, l'installation ainsi réalisée permet d'éviter en outre la transmission sur la partie amont des canalisations d'amenée d'eau sanitaire des quelques vibrations qui auraient pu se former lors du fonctionnement de l'installation.

A cet effet l'installation de distribution d'eau, notamment pour alimenter un réservoir à niveau constant tel qu'un réservoir de chasse dans un équipement sanitaire, est remarquable par son fonctionnement silencieux et elle est caractérisée par les mesures de la revendication 1.

De préférence les passages au sein de la chambre d'écoulement sont intercommunicants.

Plus spécialement, la chambre est constituée d'une capacité comportant, entre une entrée et une sortie opposées, un remplissage d'éléments solides laissant subsister entre eux des interstices constituant les passages pour l'écoulement du fluide.

Et avantageusement on a prévu que les éléments solides sont constitués de billes de forme sphéroïdale.

Plus particulièrement, la granulométrie desdites billes de remplissage au sein de la chambre d'écoulement est prévue avec un diamètre moyen compris entre 0,05 mm. et 10 mm.

Avantageusement la chambre est de forme générale cylindrique, l'entrée et la sortie étant constituée par deux sections transversales opposées dudit cylindre.

On peut de façon avantageuse prévoir la chambre immédiatement en amont de l'obturateur et plus particulièrement la chambre cylindrique sera disposée verticalement sous l'organe d'obturation, l'entrée étant disposée à la base de la chambre et la sortie située immédiatement sous le siège de l'organe d'obturation.

Plus particulièrement l'installation de distribution d'eau disposée dans le réservoir desservi est reliée en amont à la canalisation d'arrivée d'eau avec interposition d'un joint annulaire en matière élastomere évitant ainsi la transmission des vibrations sonores entre l'ensemble de distribution et la canalisation amont.

Selon une autre caractéristique l'ensemble de distribution comporte en aval de l'obturateur un tube plongeur propre à amener l'eau vers le fond du réservoir en évitant ainsi l'écoulement du fluide en chute libre, le tube comportant à son sommet une chambre pourvue d'une ouverture supérieure de mise à l'air libre et comportant de façon connue en soi un clapet d'obturation propre à être appliqué contre cette ouverture par la pression du fluide lors de la phase de remplissage.

Enfin selon une caractéristique plus particulière ladite chambre d'écoulement silencieux est constituée sous forme d'une cartouche cylindrique amovible insérée dans un carter cylindrique concentrique, relié à son sommet à l'arrivée d'eau, de sorte que l'eau pénètre au sommet du carter et s'écoule dans l'espace en forme de couronne autour de la cartouche pour pénétrer à la base de cette dernière par la tranche transversale de ladite cartouche pourvue d'un capot constitué d'une grille de filtration.

D'autres caractéristiques et avantages de l'invention sortiront de la description qui suit et qui est donnée en rapport avec une forme de réalisation présentée à titre d'exemple non limitatif.

La Figure 1 est une vue en coupe de l'ensemble de l'installation en position de fermeture de l'obturateur.

La Figure 2 est une vue en coupe de cette même installation en position d'alimentation et d'écoulement du fluide pour le remplissage du réservoir.

La Figure 3 est une vue en coupe de la cartouche constituant la chambre d'écoulement et la Figure 4 en est une vue en plan de dessus.

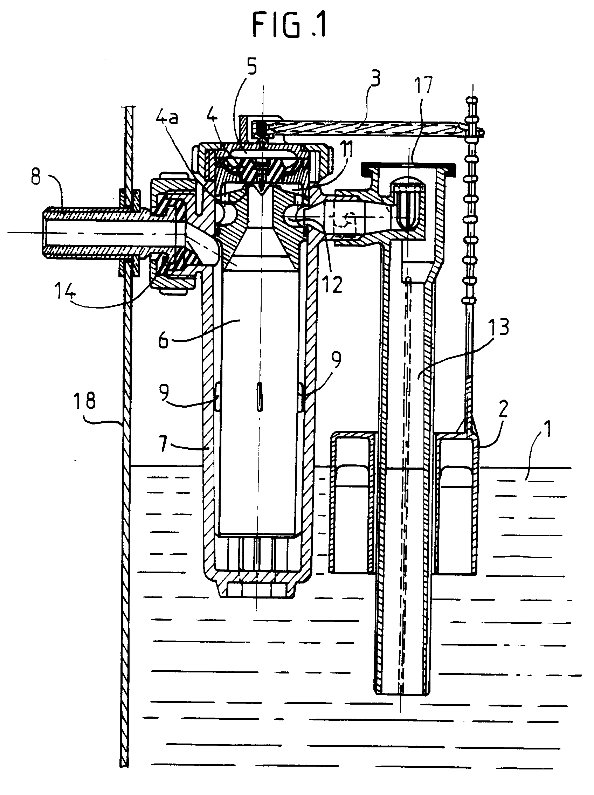

Selon l'ensemble des Figures le dispositif est destiné à alimenter un réservoir dont les parois sont représentées en 18 (Figure 1) et contenant une réserve d'eau 1 en principe à niveau constant.

A cet effet, l'ensemble d'alimentation est commandé de façon connue par un dispositif à flotteur 2 commandant par le levier 3 un ensemble d'obturation.

Dans le présent cas le système d'obturation est du type connu et est constitué d'une membrane souple 4 qui est normalement appliquée sur son siège par la pression arrière s'exerçant dans la chambre 5 par le canal central à la membrane 4 et qui met la chambre 5 en communication avec l'arrivée d'eau ; la différence de section entre la chambre 5 et le siège de la membrane provoquant le maintien en position de fermeture de la membrane d'obturation ; et toujours selon une disposition connue, l'extrémité du levier 3 vient obturer ou dégager une mise à l'air libre grâce à quoi la pression au sein de la chambre 5 est maintenue ou relâchée en permettant ainsi le jeu de la membrane d'obturation 4.

L'installation selon l'invention est remarquable en ce qu'elle comporte un ensemble assurant l'écoulement silencieux de l'eau notamment en amont de l'ensemble d'obturation.

Et cet ensemble d'écoulement est consitué d'une chambre cylindrique 6 disposée immédiatement sous le siège d'obturation 4a sur lequel s'applique la membrane d'obturation 4.

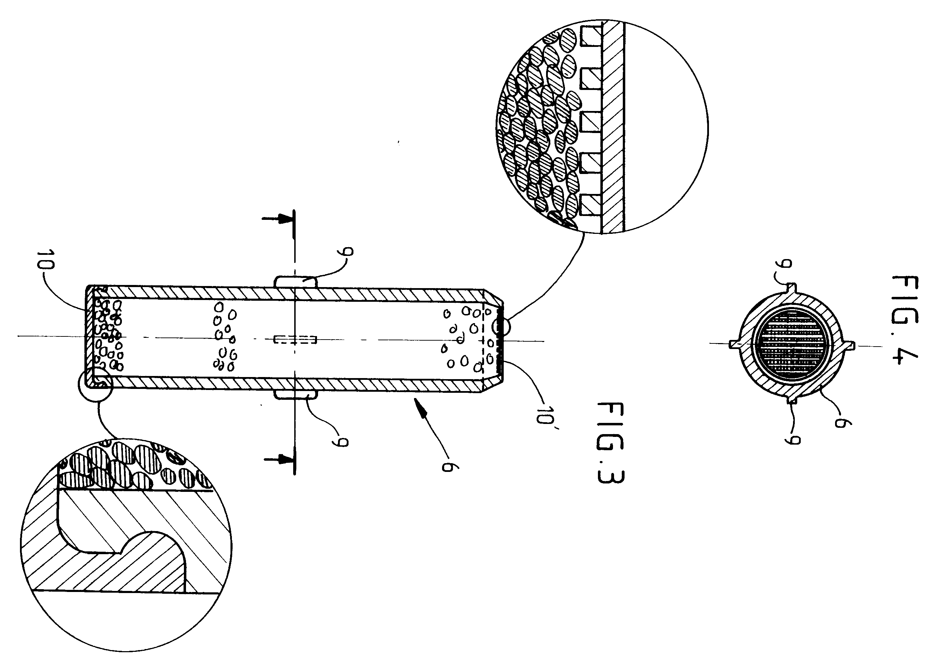

Cette chambre d'écoulement silencieux 6 (représentée en détail à la figure 3) est elle même insérée dans un carter cylindrique 7 situé à l'aplomb de l'ensemble d'obturation.

Le sommet de ce carter 7 est raccordé à l'arrivée d'alimentation en eau sanitaire 8.

Ainsi l'eau arrivant de la canalisation de raccordement 8 débouche au sommet du carter cylindrique 7 concentrique à la chambre d'écoulement 6.

La chambre d'écoulement 6 est maintenue écartée des parois du carter 7 par des ailettes radiales 9 (Figure 4) en laissant par conséquent subsister un espace annulaire formant une couronne cylindrique par laquelle l'eau peut s'écouler depuis le sommet du carter 7 jusqu'à la base de ce dernier.

L'eau pénètre alors par l'entrée de la chambre d'écoulement silencieux 6 constitué de la grille 10 (Figure 3) permettant une filtration de l'eau tout en assurant sa pénétration au sein de la capacité constituée par la chambre 6.

Cette dernière est remplie de particules ou éléments solides, ici sous forme sphérique et de faible granulométrie, par exemple des billes sphériques de diamètre de l'ordre de 1 mm., lesquelles sont bloquées dans la cartouche cylindrique 6 par la grille de filtration inférieure (prévue amovible pour les besoins de la fabrication et de l'entretien).

Une grille supérieure 10′ maintient également les billes prisonnières par le haut.

L'eau ayant traversé la chambre d'écoulement silencieux 6 arrive alors au niveau du siège 4a et elle s'écoule au delà, ou non suivant la position de la membrane d'obturation 4.

Au delà, en position d'ouverture de la membrane, l'eau passe par l'espace annullaire 11 puis l'espace annulaire 12 et s'écoule après renvoi d'angle vers le tube immergé 13.

Selon une caractéristique essentielle de l'invention la chambre d'écoulement silencieux 6 grâce à la présence des billes assure une répartition homogène des filets de fluide qui s'écoulent selon un mouvement microlaminaire, les filets étant constamment divisés et se rejoignant en léchant la surface curviforme des billes.

On obtient ainsi par une division des filets d'eau d'une part un freinage de l'écoulement de l'ensemble de la masse du fluide sans cependant créer de perturbation tourbillonnaire qui sont une source de vibrations ; les filets individuels qui se rejoignent et se reforment en passant à travers les interstices entre les billes ne rencontrent pas, grâce à la surface curviforme des billes, d'obstacle brutal ; mais on multiplie à travers la chambre des forces de frottement au niveau des interfaces fluide/solide provoquant ainsi un freinage en douceur du fluide circulant.

On obtient ainsi, grâce à ce dispositif, un écoulement extrêmement silencieux en supprimant les vibrations, turbulences et chuintements qui sont généralement constatés même de façon résiduelle sur des robinets réputés silencieux.

Par ailleurs et pour compléter ce fonctionnement silencieux, le raccordement de l'ensemble d'obturation et d'alimentation par rapport à la canalisation 8 est assuré avec interposition d'un joint annulaire 14 en matière souple et élastiquement compressible telle qu'une résine élastomère et évitant ainsi toute transmission de vibrations sonores depuis l'ensemble d'obturation vers la canalisation.

Selon un autre développement de l'invention, le tube d'acheminement 13 qui conduit l'eau vers son niveau de remplissage est lui-même équipé d'une chambre de mise à l'air libre 15 comportant, de façon connue en soi, un clapet d'obturation 16 venant s'appliquer, sous la pression de l'eau, contre l'ouverture 17 de mise à l'air libre.

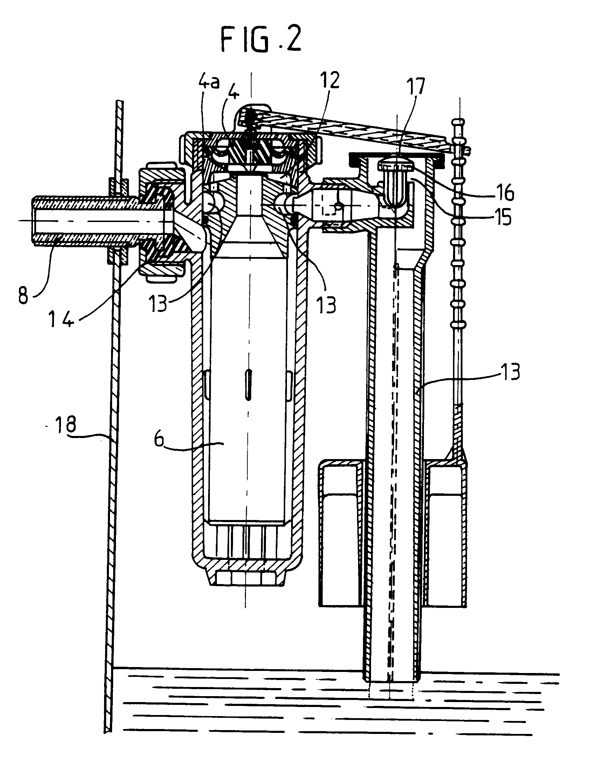

On voit ainsi à la lumière des Figures 1 et 2 que lorsque l'ensemble est en position de remplissage (Figure 2) la pression cinétique de l'eau s'exerce sur le clapet 16 provoque la remontée de ce dernier qui vient donc s'appliquer en position d'obturation contre l'ouverture de mise à l'air libre 17.

Dans ces conditions, l'écoulement de l'eau se fait constamment depuis l'arrivée 8 jusqu'à la base du tube 13 sans mise à l'air libre de sorte que un faible niveau de vibrations se trouve transmis par l'air depuis l'ensemble d'alimentation.

Ainsi qu'on le voit sur la Figure 1 lorsque le flotteur 2 provoque la fermeture de l'obturateur 4 (comme exposé ci-dessus) la pression cessant de s'exercer dans la chambre supérieure 15 entraîne le repos du clapet 16 qui libère alors l'ouverture 17 et le tube 13 finit de se vider jusqu'au niveau d'eau ; l'ouverture de mise à l'air libre 17 réalisant ainsi une mise à l'atmosphère évitant toute possibilité de "rétrosiphonage" ceci en conformité avec les règlements sanitaires.

Grâce aux divers dispositifs et moyens ce-décrits, on voit que l'installation selon l'invention réalise un ensemble pour le remplissage d'une cuve ou d'un réservoir à niveau constant évitant les bruits parasites qui accompagnent généralement le fonctionnement de dispositifs de ce genre.

## Revendications

1. Installation de distribution d'eau notamment pour alimenter un réservoir à niveau constant tel que le réservoir de chasse de toilettes sanitaires, visant à éviter ou limiter les vibrations sonores lors du remplissage du réservoir et du type comportant une chambre (6) d'écoulement du fluide contenant une pluralité d'éléments solides laissant subsister entre eux des interstices constituant des passages pour l'écoulement du fluide caractérisée en ce que les éléments solides sont constitués de billes remplissant ladite chambre dans laquelle elles sont bloquées et emprisonnées entre une grille d'entrée (10) de l'eau et une grille de sortie (10′) de l'eau.

2. Installation selon la revendication 1, caractérisée en ce que les billes sont de forme sensiblement sphérique.

3. Installation selon la revendication 1, caractérisée en ce que la granulométrie desdites billes de remplissage au sein de la chambre d'écoulement est prévue avec un diamètre moyen compris entre 0,05 mm et 10 mm et de préférence voisin de 1 mm.

4. Installation selon l'une des revendications 1 à 3, caractérisée en ce que la chambre (6) est de forme générale cylindrique, l'entrée (10) et la sortie (10′) étant constituée par deux sections transversales aux extrêmités opposées dudit cylindre.

5. Installation selon l'une des revendications 1 à 4, caractérisée en ce que la chambre (6) est disposée immédiatement en amont de l'obturateur et plus particulièrement la chambre cylindrique sera disposée verticalement sous l'organe d'obturation, l'entrée étant disposée à la base de la chambre et la sortie située immédiatement sous le siège de l'organe d'obturation.

6. Installation selon l'une des revendications 1 à 5, caractérisée en ce qu'elle est reliée à la canalisation d'arrivée d'eau courante avec interposition d'un joint annulaire (14) en matière élastomère évitant ainsi la transmission des vibrations sonores entre l'ensemble de distribution et la canalisation amont.

7. Installation selon l'une des revendications 1 à 6 caractérisée en ce qu'elle comporte en aval de l'obturateur un tube plongeur (13) propre à amener l'eau vers le fond du réservoir (1) en évitant ainsi l'écoulement du fluide en chute libre, le tube comportant à son sommet une chambre (15) pourvue d'une ouverture supérieure de mise à l'air libre (17) et comportant de façon connue en soi un clapet d'obturation (16) propre à être appliqué contre cette ouverture par la pression du fluide lors de la phase de remplissage.

8. Installation selon l'une des revendications 1 à 7, caractérisée en ce que la chambre d'écoulement silencieux est constituée sous forme d'une cartouche cylindrique amovible insérée dans un carter (7) cylindrique concentrique, relié à son sommet à l'arrivée d'eau, de sorte que l'eau pénètre au sommet du carter et s'écoule dans l'espace en forme de couronne autour de la cartouche (6) pour pénétrer à la base de cette dernière par la tranche transversale de ladite cartouche pourvue d'un capot (10) constitué d'une grille de filtration, la cartouche cylindrique comportant des ailettes d'écartement permettant son positionnement concentrique au sein du carter récepteur.

## Patentansprüche

1. Vorrichtung zur Wasserzuführung, insbesondere für einen Behälter mit konstantem Wasserstand, z.B. einen WC-Spülkasten, durch die die Entwicklung von Schallschwingungen beim Befüllen des Behälters verhindert oder reduziert werden soll, mit einer Durchflußkammer (6), die eine Vielzahl massiver Elemente und zwischen diesen bestehenden, Wasserdurchflußöffnungen ausbildenden Zwischenräumen umfaßt, dadurch gekennzeichnet, daß die massiven Elemente aus die Kammer ausfüllenden Kugeln bestehen, die in der Kammer zwischen einem Wassereintrittsgitter (10) und einem Wasseraustrittsgitter (10′) gehalten und eingeschlossen sind.

2. Vorrichtung nach Anspruch 1, dadurch gekennzeichnet, daß die Kugeln im wesentlichen rund ausgebildet sind.

3. Vorrichtung nach Anspruch 1, dadurch gekennzeichnet, daß die die Durchflußkammer ausfüllenden Kugeln in ihrer Größe so gewählt sind, daß ihr mittlerer Durchmesser zwischen 0,05 mm und 10 mm, vorzugsweise etwa 1 mm beträgt.

4. Vorrichtung nach einem der Ansprüche 1 bis 3, dadurch gekennzeichnet, daß die Kammer (6) eine allgemein zylindrische Form aufweist, wobei der Wassereintritt (10) und der Wasseraustritt (10′) durch zwei Querschnitte an den gegenüberliegenden Enden des Zylinders gebildet sind.

5. Vorrichtung nach einem der Ansprüche 1 bis 4, dadurch gekennzeichnet, daß die Kammer (6) unmittelbar vor dem Absperrventil ist und insbesondere die zylindrische Kammer senkrecht unter dem Absperrorgan angeordnet ist, wobei der Wassereintritt am Boden der Kammer und der Wasseraustritt unmittelbar unter dem Sitz des Absperrorgans angeordnet sind.

6. Vorrichtung nach einem der Ansprüche 1 bis 5, dadurch gekennzeichnet, daß sie mit der Wasserzuleitung über einen Dichtring (14) aus einem elastomeren Material verbunden ist, wodurch die Übertragung von Schallschwingungen zwischen der Einrichtung und der Wasserzuleitung vermieden wird.

7. Vorrichtung nach einem der Ansprüche 1 bis 6, dadurch gekennzeichnet, daß dem Absperrventil ein Tauchrohr (13) nachgeschaltet ist, das das Wasser zum Boden des Behälters (1) leitet und damit seinen freien Fall verhindert, wobei das Rohr an seinem oberen Ende eine Kammer (15) mit einer oberen Entlüftungsöffnung (17) und in an sich bekannter Weise ein Absperrventil (16) besitzt, das beim Befüllen des Behälters durch den Flüssigkeitsdruck gegen die Entlüftungsöffnung angedrückt wird.

8. Vorrichtung nach einem der Ansprüche 1 bis 7, dadurch gekennzeichnet, daß die geräuschvermindernde Durchflußkammer in Form einer entnehmbaren zylindrischen Patrone ausgebildet ist, die in ein konzentrisches, zylindrisches, an seinem oberen Ende mit dem Wasserzulauf verbundenes Gehäuse (7) eingesetzt ist, so daß das Wasser am oberen Ende des Gehäuses eintritt, den ringförmigen freien Raum um die Patrone (6) herum durchströmt und am Boden der Patrone in diese durch einen querschnitt eintritt, der mit einer aus einem Filtergitter bestehenden Kappe (10) abgedeckt ist, wobei die zylindrische Patrone mit Abstandshaltern ausgestattet ist, die ihre konzentrische Positionierung innerhalb des sie aufnehmenden Gehäuses ermöglichen.

## Claims

1. Water distribution installation particularly for supplying a tank with constant level such as the flush tank of a toilet, aiming at avoiding or limiting the sound vibrations when the tank is being filled and of the type comprising a chamber (6) for flow of the fluid containing a plurality of solid elements leaving therebetween interstices constituting passages for the flow of the fluid, characterized in that the solid elements are constituted by balls filling said chamber in which they are blocked and imprisoned between a water inlet grid (10) and a water outlet grid (10′).

2. Installation according to Claim 1, characterized in that the balls are substantially spherical in shape.

3. Installation according to Claim 1, characterized in that the granulometry of said balls filling the interior of the flow chamber is provided with a mean diameter of between 0.05 mm and 10 mm and preferably close to 1 mm.

4. Installation according to one of Claims 1 to 3, characterized in that the chamber (6) is generally cylindrical in shape, the inlet (10) and the outlet (10′) being constituted by two transverse sections at the opposite ends of said cylinder.

5. Installation according to one of Claims 1 to 4, characterized in that the chamber (6) is disposed immediately upstream of the obturator and more particularly the cylindrical chamber will be disposed vertically beneath the obturation member, the inlet being disposed at the base of the chamber and the outlet located immediately beneath the seat of the obturation member.

6. Installation according to one of Claims 1 to 5, characterized in that it is connected to the running water admission pipe with the interposition of an O-ring (14) of elastomer material thus avoiding the transmission of the sound vibrations between the distribution assembly and the upstream pipe.

7. Installation according to one of Claims 1 to 6, characterized in that it comprises, downstream of the obturator, an immersion tube (13) adapted to conduct the water towards the bottom of the tank (1), thus avoiding flow of the fluid in free fall, the tube comprising at its top a chamber (15) provided with an upper opening (17) for communication with the open air and comprising in manner known per se an obturation flap valve (16) adapted to be applied against this opening by the pressure of the fluid during the filling phase.

8. Installation according to one of Claims 1 to 7, characterized in that the silent flow chamber is constituted in the form of a removable cylindrical cartridge inserted in a concentric cylindrical casing (7), connected at its top to the water admission, with the result that the water penetrates at the top of the casing and flows in the ring-shaped space around the cartridge (6) to penetrate at the base of the latter via the transverse edge of said cartridge provided with a cap (10) constituted by a filtration grid, the cylindrical cartridge comprising spacer fins allowing concentric positioning thereof within the receiver casing.
